Europäisches Patentamt

European Patent Office

Office européen des brevets

(19)

(11) **EP 0 414 314 B1**

(12) **FASCICULE DE BREVET EUROPEEN**

(45) Date de publication et mention
de la délivrance du brevet:
**07.01.1998 Bulletin 1998/02**

(51) Int Cl.⁶: **G06K 19/073**

(21) Numéro de dépôt: **90202227.6**

(22) Date de dépôt: **20.08.1990**

(54) **Procédé de génération de nombre unique pour carte à micro-circuit et application à la coopération de la carte avec un système hôte**

Verfahren zur Erzeugung einer einmaligen Zahl für eine Mikroschaltungskarte und Verwendung derselben zur Zusammenarbeit der Karte mit einem Wirtssystem

Single-number generation method for micro-chip card and use of same for the cooperation of the card with a host-system

(84) Etats contractants désignés:
**BE DE ES FR GB IT NL SE**

(30) Priorité: **22.08.1989 FR 8911113**

(43) Date de publication de la demande:
**27.02.1991 Bulletin 1991/09**

(73) Titulaire: **DE LA RUE CARTES ET SYSTEMES**
**75013 Paris (FR)**

(72) Inventeur: **Hoppe, Joseph, Société Civile S.P.I.D.**
**F-75008 Paris (FR)**

(74) Mandataire: **Barbin le Bourhis, Joel et al**
**Cabinet Bonnet-Thirion,**
**12, Avenue de la Grande-Armée**
**75017 Paris (FR)**

(56) Documents cités:
**EP-A- 0 096 599          EP-A- 0 252 849**
**EP-A- 0 281 058          EP-A- 0 284 133**
**EP-A- 0 304 547          EP-A- 0 320 489**
**FR-A- 2 611 962**

## Description

La présente invention concerne un procédé de génération de nombre unique NU pseudo-aléatoire par une carte à microcircuit, chaque nombre unique NU obtenu par chiffrement d'un message d'entrée ME, unique, engendré par la carte à microcircuit étant destiné à individualiser, lors d'une utilisation spécifique de la carte à microcircuit, la coopération, par l'intermédiaire de ladite carte, avec un système hôte, ladite carte comportant une mémoire vive RAM, et une mémoire morte PROM incorporant une clé de fabrication PK, une clé émetteur MK, un code porteur CP et un numéro de série NS.

L'invention concerne aussi des applications du procédé de génération de nombre unique, notamment pour l'authentification d'un système hôte coopérant, par l'intermédiaire d'un lecteur, avec une carte à microcircuit ou pour la réhabilitation, par un système hôte habilité, d'une carte à microcircuit qui aurait été bloquée suite à plusieurs (trois) présentations consécutives fausses du code porteur.

L'invention concerne aussi un générateur pour générer un nombre unique pseudo-aléatoire du type indiqué, à une carte à microcircuit logeant un tel générateur et à un système de vérification comportant une chaîne de dispositifs interconnectés comprenant un système hôte, un terminal, et une carte à microcircuit du type indiqué ci-dessus. Un tel procédé et de tels dispositif et système sont avantageusement utilisés pour l'échange de données des opérations financières de débit et de crédit, et pour d'autres objets à caractère fiduciaire sensible entre des systèmes hôtes et des personnes au moyen de terminaux sans opérateur.

Un nombre aléatoire ou pseudo-aléatoire est généralement utilisé dans des protocoles cryptographiques afin d'empêcher la réutilisation (le rejeu) de données chiffrées (surtout par une personne non autorisée), ou tout simplement en tant qu'élément d'authentification. D'une manière générale, l'élaboration d'un algorithme visant à générer un nombre pseudo-aléatoire est complexe, ce qui pose le problème technique de concevoir un tel algorithme lorsque ce dernier doit être exécuté dans un composant à microprocesseur ayant des capacités de mémoire vive RAM et de mémoire morte ROM réduites comme c'est le cas dans une carte à microcircuit. La génération d'un nombre aléatoire s'effectue de façon connue dans un appareil électronique qui coopère avec une carte à microcircuit comme décrit par exemple dans le brevet européen 0 096 599, où un générateur de nombres aléatoires (GNA) est prévu dans un appareil de transaction, dans le but d'authentifier ou certifier une information contenue dans une mémoire d'un support électronique. Pour des applications d'une carte à microcircuit qui requièrent un degré élevé de sécurité et de confidentialité, il est souhaitable que la carte à microcircuit engendre elle-même les nombres (pseudo) aléatoires précités (nombres uniques), ce qui a pour effet de mettre cette dernière sur un pied d'égalité par rapport aux appareils électroniques qui coopèrent avec elle (lecteur proche, système hôte distant) en lui permettant d'effectuer elle-même de façon interne, inaccessible, des calculs cryptographiques suivis de comparaisons de cryptogrammes, pour validation éventuelle de telle ou telle utilisation spécifique.

On notera que, de la demande de brevet européen EP A 0 320 489, est connu un procédé de génération de nombre pseudo-aléatoire par une carte à microcircuit, chaque nombre pseudo-aléatoire étant obtenu par chiffrement d'un message d'entrée, unique, engendré par la carte à microcircuit.

Les propriétés caractéristiques requises de chaque nombre unique émis par la carte sont les suivantes :

- le nombre généré ne doit pas être prévisible quel que soit le nombre généré précédemment et quel que soit le type de carte utilisé,
- le nombre généré doit être différent à chaque mise sous tension,
- le nombre généré doit être indépendant du moment de sa requête,
- le nombre généré n'est utilisable qu'une fois (nombre unique).

Un but de l'invention est la génération, dans une carte à microcircuit, d'un nombre pseudo-aléatoire par un programme spécifique de la carte.

Un autre but de l'invention est la génération, dans une carte à microcircuit, d'un nombre pseudo-aléatoire par cryptage réversible d'un message d'entrée unique engendré par la carte.

Encore un autre but de l'invention est la génération, dans une carte à microcircuit, d'un nombre pseudo-aléatoire par cryptage réversible d'un message d'entrée unique engendré par la carte, sous une clé de présentation résultant d'une opération logique entre deux clés de présentation préalablement introduites dans la carte.

Ces buts sont atteints grâce au fait que le procédé indiqué en préambule est remarquable en ce que ledit nombre NU est engendré et stocké en mémoire RAM dans ladite carte après exécution successive des étapes suivantes d'un programme spécifique de la carte :

a - la combinaison des deux clés PK et MK en effectuant entre elles une opération logique dont le résultat est une clé KMP et le stockage en mémoire RAM de la clé KMP, ladite clé KMP étant engendrée par ladite carte et inaccessible de l'extérieur,

2

b - le chiffrement en ledit nombre unique NU d'un message d'entrée ME, unique, engendré par la carte, qui se modifie à chaque utilisation spécifique, au moyen d'un algorithme réversible ALG, ALG$^{-1}$ sous la clé KMP :

$$NU = ALG_{KMP}(ME).$$

A noter qu'il est connu, du document EP-A 0 320 489, un procédé de génération de nombre unique pseudo-aléatoire par une carte à microcircuit, chaque nombre unique étant destiné à individualiser, lors d'une utilisation spécifique d'une carte à microcircuit, la coopération, par l'intermédiaire de ladite carte, avec un système hôte, ce nombre unique étant engendré à partir d'une clé qui a été introduite dans une mémoire de la carte, et stocké en mémoire dans ladite carte après exécution de l'étape suivante d'un programme spécifique de la carte :

- chiffrement en ledit nombre unique, au moyen d'un algorithme sous ladite clé d'un message d'entrée, unique, engendré par la carte et qui se modifie à chaque utilisation spécifique.

De préférence, selon l'invention, ladite opération logique est l'addition modulo 2 et l'algorithme de cryptage réversible utilisé est, pour la mise en oeuvre de l'invention, le système de chiffrement à clé secrète dit : Data Encryption Standard (noté DES pour sa fonction de chiffrement et DES$^{-1}$ pour sa fonction de déchiffrement) décrit dans la publication "Federal Information Processing Standards Publication" (FIPS PUB46) du 15 janvier 1988 du Bureau National des Standards du Ministère du Commerce américain. Cet algorithme est naturellement présent dans la carte à microcircuit pour réaliser des fonctions cryptographiques et protéger des données (voir à ce sujet le brevet FR 2 611 962 au nom de la demanderesse).

La propriété du nombre pseudo-aléatoire ainsi obtenu d'être unique avec les propriétés caractéristiques précisées ci-dessus résulte en partie de propriétés que doivent posséder le message d'entrée ME et la clé KMP. Selon un mode de réalisation préféré de l'invention pour ce qui est de la génération du message d'entrée, le procédé de génération de nombre unique NU est remarquable en ce que ladite carte comporte en outre un compteur RAM contenant le nombre CTRAM, un compteur PROM contenant le nombre CTROM et que ledit message d'entrée ME est constitué par la juxtaposition des trois nombres : NS, CTRAM, CTROM, ledit compteur RAM étant initialisé à 00...0 à chaque mise sous tension de la carte et incrémenté à chaque génération de nombre unique NU, et le compteur PROM étant incrémenté lors d'une utilisation spécifique après chaque mise sous tension ou remise à zéro de la carte (RESET) si le code porteur CP n'a pas été présenté ou si le compteur RAM passe en débordement.

Selon un mode de réalisation préféré de l'invention pour ce qui est de la génération de la clé KMP, le procédé est remarquable en ce que la clé PK n'est connue que du fabricant de carte et que la clé MK n'est connue que de l'émetteur de la carte et que, par conséquent, la clé KMP qui se trouve en mémoire RAM et, bien sûr, inaccessible de l'extérieur, ne peut être connue d'aucune des deux parties, ce qui est conforme à la première propriété de la génération du nombre unique.

L'incrémentation des compteurs RAM et PROM ainsi réalisée est telle qu'il n'est pas possible d'obtenir deux fois le même message d'entrée pendant la durée de vie de la carte à microcircuit. De plus, ce message d'entrée est unique pour chaque carte étant donné que son numéro de série est unique.

Une application préférée du procédé de génération de nombre unique selon l'invention concerne l'authentification d'un système hôte coopérant, par l'intermédiaire d'un lecteur, avec une carte à microcircuit en utilisant un mode de fonctionnement du DES qui est le M.A.C. décrit notamment dans le document ANSI X9.9 publié en 1982 par l'American Bankers Association ; cette application est caractérisée par les étapes suivantes :

a - le système hôte envoie à la carte à microcircuit une instruction de génération de nombre unique NU,
b - la carte engendre un nombre unique NU, le stocke dans sa mémoire RAM et l'envoie au système hôte.
c - la carte et le système hôte calculent au moyen dudit algorithme de cryptage (chiffrent), sous une même clé maître KAC de la carte, une valeur d'authentification VAE pour le système hôte et VAC pour la carte respectivement :
$$VAE = ALG_{KAC}(NU)$$
$$VAC = ALG_{KAC}(NU)$$
d - le système hôte envoie la valeur d'authentification VAE à la carte,
e - la carte compare les valeurs d'authentification VAE et VAC et valide pour la suite des opérations sa coopération avec le système hôte si et seulement si l'identité suivante est vérifiée à l'intérieur de la carte :
$$VAE \equiv VAC$$

Dans ce contexte de coopération carte-système hôte, l'authentification du système hôte par la carte permet de prouver que l'on possède la bonne clé sans risque de divulgation de la clé, ceci étant dû au fait que c'est la carte elle-même qui effectue le calcul cryptographique VAC et non le lecteur, ce qui impliquerait, dans ce dernier cas, l'extraction de la clé KAC en clair de la carte vers le lecteur et donc un risque de divulgation afférent.

Une autre application préférée du procédé de génération de nombre unique selon l'invention concerne la réhabilitation de carte à microcircuit après plusieurs, notamment trois présentations consécutives fausses dudit code porteur CP, la carte étant connectée à un système hôte, situé à distance, au moyen d'un lecteur, et ledit système hôte comportant une clé maître KEC de la carte, nécessaire à ladite réhabilitation ; cette application est caractérisée par les étapes suivantes :

a - le lecteur envoie à la carte à microcircuit une instruction de génération de nombre unique NU,

b- la carte engendre un nombre unique NU

c - le lecteur stocke le nombre unique NU en provenance de la carte, ainsi qu'un paramètre d'erreur PE et effectue la saisie du code porteur CP introduit par le porteur de la carte,

d - le lecteur calcule un message de réhabilitation MR par addition modulo 2 :
$$MR = (CP, PE, PE) \oplus NU$$

e - le lecteur envoie au système hôte le message de réhabilitation MR accompagné d'une instruction de demande d'authentification du message MR,

f - le système hôte chiffre sous la clé KEC le message MR :
$$RES = ALG_{KEC}(MR)$$
et envoie le cryptogramme RES au lecteur,

g - le lecteur transmet le cryptogramme RES à la carte,

h - la carte exécute, sous la clé KEC, le chiffrement inverse du cryptogramme RES :
$$ALG^{-1}_{KEC}(RES) = MR'$$

i - la carte effectue l'addition modulo 2 :
$$MR' \oplus NU = CP', PE', PE''$$

j - la carte annule le paramètre d'erreur PE si et seulement si les identités suivantes sont vérifiées à l'intérieur de la carte :
$$CP' \equiv CP$$
$$PE' \equiv PE'' \equiv PE.$$

La carte est ainsi rétablie dans un état actif après être restée bloquée suite à un nombre préétabli de présentations consécutives fausses du code porteur, encore appelé code utilisateur, code confidentiel ou, en langue anglaise Personal Identification Number (PIN). Cette réhabilitation de la carte s'effectue à nouveau avec une parfaite confidentialité étant donné que le code porteur CP n'est pas transmis en ligne entre le lecteur et le système hôte, et que la clé maître KEC n'est pas communiquée au lecteur.

La description suivante, en regard des dessins annexés, le tout donné à titre d'exemple, fera bien comprendre comment l'invention peut être réalisée.

La figure 1 représente une carte à microcircuit introduite dans un lecteur, le tout relié à un système hôte, selon l'invention.

La figure 2 est le schéma d'un processus d'authentification entre une carte et un système hôte, selon l'invention.

La figure 3 est le schéma d'un processus de réhabilitation de carte bloquée par un système hôte habilité, selon l'invention.

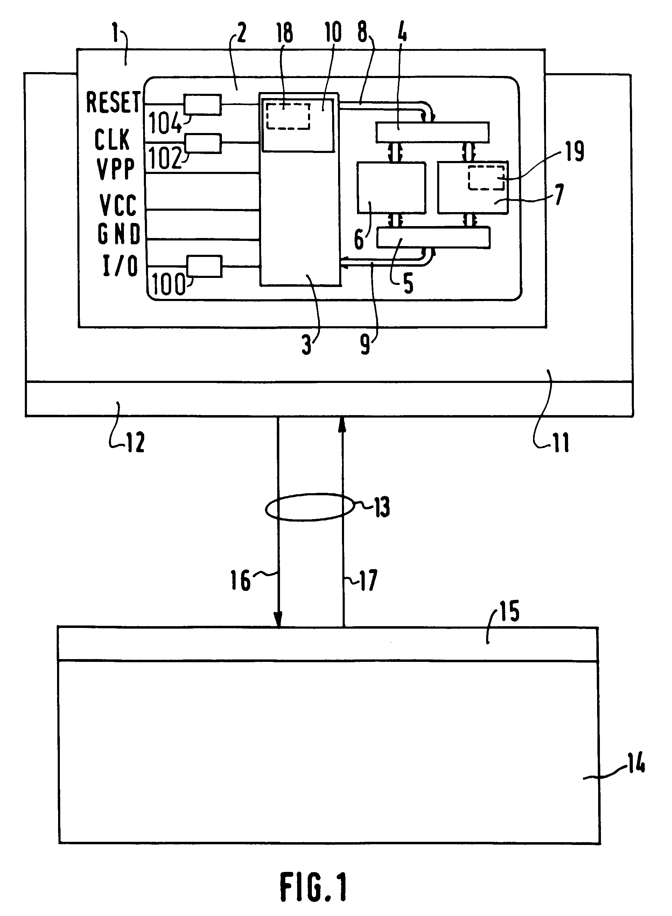

Sur la figure 1 est représenté un support électronique amovible et portatif 1 appelé carte à microcircuit ou carte dans la suite du texte. Le microcircuit 2 de la carte présente une architecture connue pour l'essentiel. Cette architecture consiste en un microprocesseur 8 bits 3 qui peut incorporer une mémoire RAM 10, deux mémoires vives RAM montées en tampon 4 et 5, une mémoire de programme ROM 6 et une mémoire de données de type EPROM ou E2PROM 7. La mémoire RAM 4 est reliée au microprocesseur 3 par un bus d'adresses bidirectionnel 8 et la mémoire RAM 5 est reliée au microprocesseur par un bus de données bidirectionnel 9. Par ailleurs, chaque RAM 4,5 est reliée aux mémoires 6,7 chaque fois par un bus bidirectionnel (non référencés). La mémoire 7 est, d'un point de vue technologique, une EPROM mais qui, après inscription de certaines données comme notamment des clés, comme indiqué ci-dessous, est agencée de façon à n'être ni effaçable ni réinscriptible, c'est-à-dire de façon à fonctionner comme une PROM dans le cas d'une EPROM.

La carte 1 est représentée symboliquement introduite dans un lecteur 11. La carte possède 6 contacts qui, dans cette position d'introduction, coopèrent avec 6 contacts homologues du lecteur et qui sont, en allant du bas vers le haut sur la figure, représentés d'une manière schématique sans respecter un ordre particulier : le contact d'entrée-sortie série I/O, le contact de masse GND, l'alimentation du microcircuit VCC (5V), l'alimentation de programmation VPP, l'horloge CLK et la remise à zéro, RESET. Certains de ces 6 contacts sont reliés au microcircuit par l'intermédiaire de ports (non référencés). Au moyen d'une interface 12 et d'une liaison de communication, par exemple une ligne de transmission 13, le lecteur communique à distance avec un système hôte 14 qui comporte lui aussi une interface 15. La ligne de transmission 13 a été représentée symboliquement par deux fils, le fil 16 qui transmet de l'information du lecteur 11 vers le système hôte 14 et le fil 17 qui transmet l'information en sens inverse.

La mémoire 7 incorpore des clés de présentation ou clés maîtres et des clés de calcul. Parmi les clés de présentation on distingue notamment une clé de fabrication PK introduite par le fabricant en phase de prépersonnalisation et que le fabricant est seul à connaître, et une clé émetteur MK introduite en phase de personnalisation par l'organisme émetteur de la carte, dit : l'émetteur, par exemple une banque, et que l'émetteur est seul à connaître. La clé PK protège la carte contre des personnalisations non autorisées ; elle est générée à partir d'une carte lot du fabricant. Une autre clé de présentation est le code porteur CP qui est relatif au détenteur de la carte. Ce code porteur doit rester confidentiel.

La mémoire 7 comporte aussi un numéro de série NS qui a les propriétés d'être lisible sur la carte, donc non confidentiel, et propre à chaque carte.

L'invention se propose d'engendrer de façon simple, au moyen d'un programme spécifique contenu dans la mémoire programme 6, un nombre pseudo-aléatoire dit nombre unique. Pour cela, trois moyens sont appliqués : le premier moyen consiste à combiner en mémoire RAM 10 de la carte les deux clés PK et MK en effectuant entre elles une opération logique, de préférence l'addition bit à bit OU exclusif (addition modulo 2) :

$PK \oplus MK = KMP$ (PK, MK et KMP comportant le même nombre de bits, par exemple 64).

On obtient ainsi la clé KMP qui ne peut ni être extraite du microcircuit 2 ni être altérée par l'extérieur et n'est donc connue de personne.

Selon le deuxième moyen, la clé KMP est combinée avec un message (nombre) ME engendré par la carte, dit message d'entrée, qui a la propriété principale d'être unique, en se modifiant à chaque utilisation spécifique, et qui ne peut ni être extrait du microcircuit 2 ni être altéré par l'extérieur. Cette combinaison consiste en le chiffrement par un algorithme réversible ALG, ALG$^{-1}$, sous la clé KMP, du message ME :

$ALG_{KMP}(ME) = NU$

NU : nombre unique (pseudo-aléatoire).

De préférence, l'algorithme de cryptage réversible utilisé est le système de chiffrement à clé secrète bien connu, dit : Data Encryption Standard (DES, DES$^{-1}$) dont une référence est déjà indiquée ci-dessus, ou Data Encryption Algorythm (DEA, DEA$^{-1}$).

Le troisième moyen utilisé pour le procédé de génération du nombre unique NU consiste en l'étape préalable de génération du message d'entrée ME. Ce message ME doit posséder les propriétés suivantes : il doit être différent à chaque mise sous tension, être indépendant du moment de sa requête et être lui-même un nombre unique, c'est-à-dire n'être utilisable qu'une fois, ne jamais se répéter. Parmi de nombreuses solutions qui sont à la portée de l'homme de l'art pour la génération du nombre ME selon les critères précités, on choisit de préférence la solution suivante qui implique la création d'un compteur RAM référencé 18 en trait interrompu dans la mémoire RAM 10 par exemple incorporée dans le microprocesseur 3 et dont l'état de chargement est désigné par CTRAM, et d'un compteur PROM 19 en trait interrompu dans la mémoire PROM 7 et dont l'état de chargement est désigné par CTROM : le message d'entrée ME est constitué de trois éléments juxtaposés, en allant des poids forts vers les poids faibles, qui sont :

- Le numéro de série de la carte NS, unique en ce qu'il permet de différencier une carte de toutes les autres, et qui est introduit en phase de prépersonnalisation (par le fabricant).
- CTRAM, incrémenté à chaque génération de nombre unique NU, le compteur RAM 18 étant initialisé à 0 0 ...0 à chaque mise sous tension de la carte ou à chaque remise à zéro (RESET).
- CTROM, incrémenté après chaque mise sous tension ou remise à zéro (RESET) si le code confidentiel du porteur CP n'a pas été présenté ou si le compteur RAM 18 passe en débordement. Le message d'entrée ME se présente donc sous la forme :

NS, CTRAM, CTROM

L'incrémentation (de une ou plusieurs unités) du compteur RAM à chaque génération de nombre unique NU assure que le message d'entrée ME varie d'une utilisation spécifique de la carte à l'utilisation suivante, le microcircuit 2 étant supposé sous tension. Le but recherché étant que des séquences identiques de valeurs consécutives du nombre ME ne puissent se produire et étant donné que CTRAM reprend périodiquement la valeur zéro, l'incrémentation (de une ou plusieurs unités) du compteur PROM 19, notamment lors de la mise sous tension, permet d'éviter cette répétition de séquences identiques indésirable.

Par ailleurs, des modes d'incrémentation spécifiques du compteur ROM sont prévus pour contrecarrer des agissements frauduleux éventuels par un manipulateur de la carte non habilité. Il s'agit là de l'incrémentation du compteur PROM suite à un défaut de présentation du code porteur CP. De plus, si un fraudeur essaie d'épuiser les possibilités de comptage du compteur RAM en faisant engendrer systématiquement par la carte des nombres NU successifs sans débranchement ni remise à zéro du microcircuit, lorsque le compteur RAM 18 revient à zéro après débordement (overflow), suite à plusieurs dizaines de milliers d'essais, une séquence de nombre ME différente de celle correspondant aux premiers essais apparaît à cause de l'incrémentation du compteur PROM lors du passage en débordement de la RAM. De cette manière, il est impossible pour quiconque de prévoir et donc d'engendrer de l'extérieur du microcircuit un nombre NU identique à un nombre NU déjà engendré par la carte, lors d'une utilisation spécifique de cette dernière, ce qui empêche toute possibilité de fraude, pour celles parmi les applications qui sont nécessairement liées à la four-

EP 0 414 314 B1

niture par la carte elle-même du nombre unique NU et à son utilisation ultérieure combinée à des opérations de chiffrement et de vérification d'identité(s) mathématique(s).

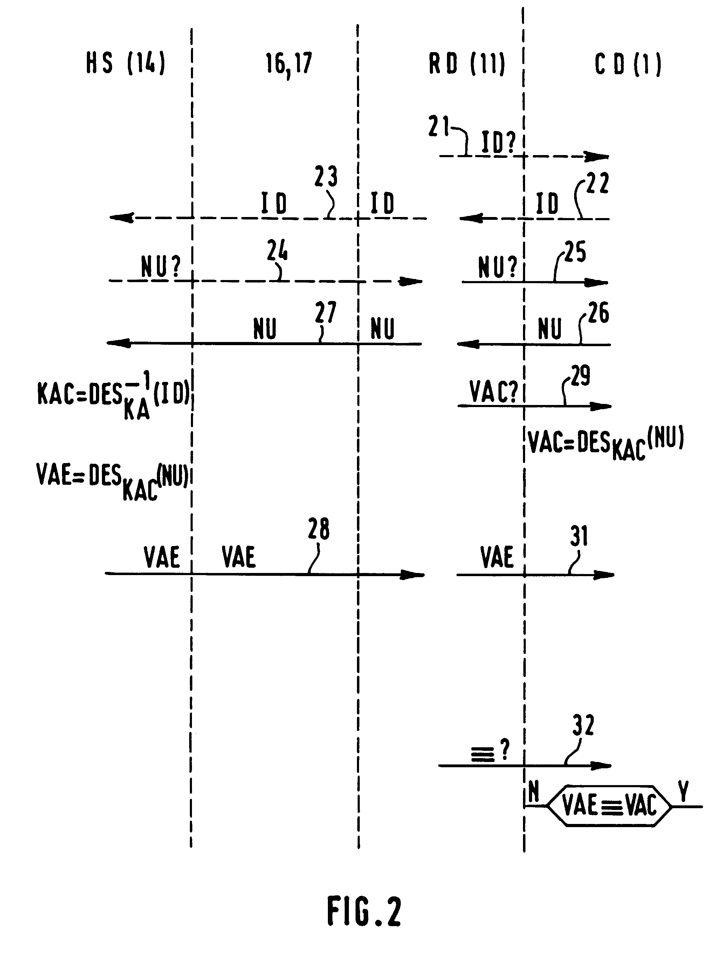

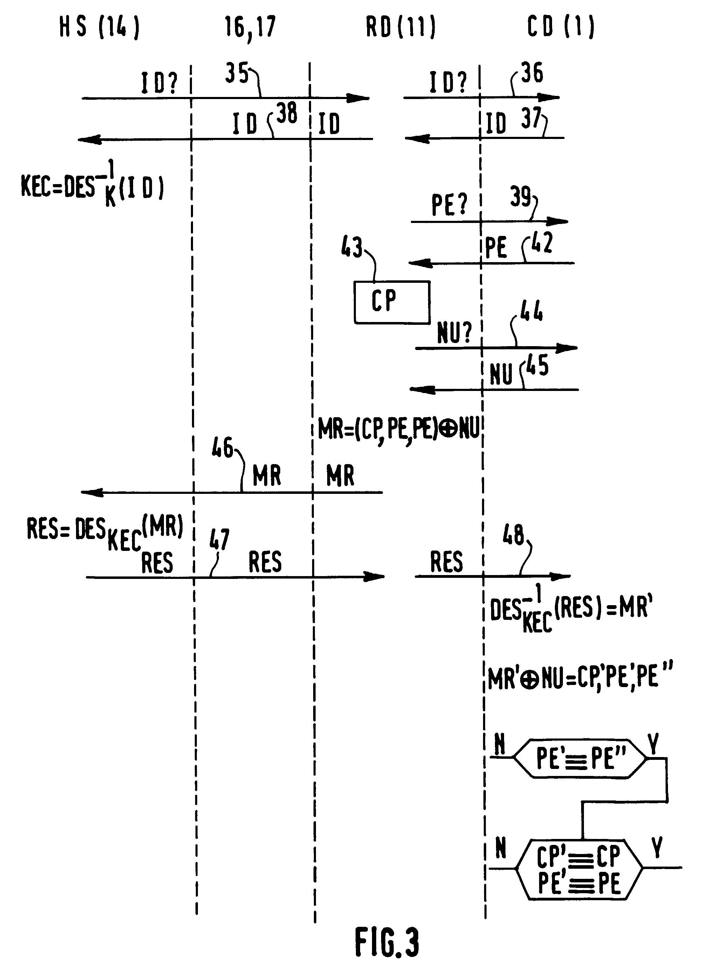

Deux applications majeures du procédé de génération de nombre unique NU tel que décrit ci-dessus, sont à présent décrites en référence aux figures 2 et 3 sur lesquelles les flèches en trait interrompu indiquent des étapes optionnelles de la coopération entre la carte, CD , et le système hôte, HS, par l'intermédiaire du lecteur de carte, RD.

Le procédé d'identification de la figure 2 résume la situation suivante : un lecteur dans lequel a été introduite une carte, vérifie en utilisant cette dernière, que le système hôte à distance est bien celui avec lequel la carte est censée être connectée. Sur la figure, la colonne entre traits interrompus verticaux, référencée 16, 17, symbolise la ligne de transmission 13 de la figure 1.

D'une façon générale, connue, pour le type d'applications envisagées ici, le système hôte est censé connaître ou reconnaître une clé maître de présentation de la carte, référencée KAC (respectivement KEC) au moyen de laquelle des chiffrements sont effectués dans la carte et dans le système hôte (système hôte qui peut d'ailleurs posséder luimême une carte pour effectuer lesdits chiffrements). De préférence, un chiffrement préalable de la clé KAC est effectué, toujours de façon connue, sous la forme d'un cryptogramme ID, dit code d'identification, pour éviter la transmission en ligne en clair de la clé KAC. Cette étape optionnelle est utilisée de préférence en début de processus des figures 2 et 3.

Pour l'authentification, figure 2, le lecteur envoie, en 21, une instruction de lecture du code d'identification ID par la carte. Le code ID est transmis en 22 de la carte au lecteur puis, en 23 du lecteur au système hôte. La flèche 24 indique une instruction optionnelle de demande de nombre unique (pseudo-aléatoire) NU par le système hôte et la flèche 25, la même instruction relayée ou initiée par le lecteur. La carte génère un nombre NU comme indiqué cidessus, nombre qu'elle conserve en mémoire RAM 10. En 26, le nombre NU est transmis au lecteur, puis, en 27, du lecteur au système hôte. En premier lieu, le système hôte calcule alors par chiffrement inverse de ID la clé maître de présentation KAC de la carte (à moins que selon une variante, elle lui ait été préalablement transmise par la carte et reconnue dans une table interne au système hôte) :

$KAC = DES_{KA}^{-1}(ID)$

La clé KA est une clé d'application, utilisée notamment dans un contexte (environnement) M.A.C. décrit dans le document ANSI X9.9 publié par l'American Bankers Association et qui implique l'usage de l'algorithme DES plusieurs fois en cascade dans le cas de messages comportant plus de 64 bits. Puis le système hôte calcule une valeur d'authentification sous la forme du cryptogramme VAE : $VAE = DES_{KAC}(NU)$

En 28, VAE est transmis au lecteur et mémorisée par celui-ci pour une opération ultérieure. En 29, le lecteur envoie à la carte une instruction de calcul de valeur d'authentification VAC. La carte effectue alors un cryptage (chiffrement) analogue à celui effectué pour VAE dans le système hôte.

$VAC = DES_{KAC}(NU)$

On notera que, dans ce mode de fonctionnement, la valeur d'authentification VAC ne peut pas être extraite de la carte.

En 32, le lecteur envoie une instruction de comparaison entre VAC et VAE qu'il transmettra en même temps, en 31 (VAE ayant été mémorisée par le lecteur à l'étape 28). La carte effectue cette comparaison :

$VAE \equiv VAC$

Dans le cas de l'identité (Y) la carte valide la suite des opérations prévues pour l'application envisagée entre la carte et le système hôte. Si non (N) la carte signale son désaccord pour la suite des opérations. Dans cette application d'authentification entre une carte à microcircuit et un système hôte, le nombre pseudo-aléatoire NU engendré par la carte a pour fonction principale d'éviter le réemploi (le rejeu) de la valeur d'authentification VAE ou VAC.

Le principe de réhabilitation à distance représenté à la figure 3 sous la forme schématique d'échanges entre quatre intervenants, les mêmes qu'à la figure 2, à savoir HD, RD, CD et le porteur de la carte, consiste à remettre dans un état actif une carte en état bloqué, suite à trois présentations consécutives de code confidentiel porteur CP faux, ce qui est supposé être le cas d'une manipulation de la carte par une personne non habilitée ou résulter de plusieurs essais erronés du porteur lui-même. On suppose à titre d'exemple dans ce qui suit, que la mémoire ROM 7 comporte entre autres une zone de contrôle connue, présentant plusieurs lignes de bits vierges (à l'état 1) dans laquelle une inscription est effectuée chaque fois que le code porteur de la carte CP a été présenté. Une présentation correcte de CP se traduit par un bit fondu (passage irréversible de l'état 1 à l'état 0), de la gauche vers la droite dans la ligne et du haut vers le bas des lignes. Le bit fondu est repéré par un pointeur, ce dernier avançant d'une position de bit lors d'une présentation correcte. Pour ne pas compliquer l'exposé, l'exemple ci-dessous montre une seule ligne de bits. De plus, une présentation fausse du code se traduit par un bit non fondu. Ceci s'effectue de façon que le pointeur avance de deux positions de bits si la présentation précédente était correcte. Par contre, si la présentation précédente était, elle aussi, fausse, le pointeur n'avance que d'une position de bit. En outre, le bit indiqué après l'avancement du pointeur est toujours fondu. La solution adoptée au cas où seulement une ou deux erreurs se produisent consécutivement est que la configuration . . 1 0 0 . . est fondue en . . 0 0 0 . . étant entendu que le bit 1 suivant est fondu lors d'une présentation correcte du code. Le tableau suivant montre une séquence d'états de mémorisation dans un exemple pratique, pour lequel la position du pointeur est indiquée du fait de souligner la position de bit qu'il repère.

```
1 erreur              0 0 . 0 0 1 0 1 1 . . . . . . 1 1
2 erreurs             0 0 . 0 0 1 0 0 1 . . . . . . 1 1
1 présentation bonne  0 0 . 0 0 0 0 0 1 . . . . . 1 1
1 erreur              0 0 . 0 0 0 0 0 1 0 1 . . . 1 1
2 erreurs             0 0 . 0 0 0 0 0 1 0 0 1 . . 1 1
3 erreurs (blocage)   0 0 . 0 0 0 0 0 1 0 0 1 . 1 1
```

B

Le programme en mémoire 6 est conçu pour reconnaître la configuration fautive 1000 dans cette zone et bloquer en conséquence la carte. L'adresse du bit B à l'état 1, qui est désignée sous le vocable de : paramètre en erreur PE, repère le bit B par son numéro de ligne et par son rang dans la ligne, l'adresse PE étant conservée en mémoire RAM 10. Dans l'application de la figure 3, la carte CD est connectée à un système hôte HS situé à distance par l'intermédiaire du lecteur RD. Cette connection est obligatoire car le système hôte possède la clé maître KEC nécessaire à la réhabilitation de la carte, c'est-à-dire son déblocage, obtenue par la fonte autorisée du bit B. De préférence, comme dans l'application de la figure 2, la clé KEC n'est pas transmise en clair et les premiers échanges s'effectuent sensiblement comme dans cette première application. Les échanges sont les suivants :

Le système hôte HS envoie, en 35, une instruction de lecture du code d'identification ID au lecteur RD et cette instruction est relayée en 36 du lecteur à la carte CD. Le code ID est transmis en 37 de CD à RD puis, en 38, de RD à HS. Le système hôte calcule la clé KEC sous forme d'un cryptogramme :

$KEC = DES_K^{-1}$ (ID) K étant une clé maître et KEC une clé dérivée de cette première, qui est contenue dans la carte et vue comme clé maître pour l'application considérée. En 39, RD envoie une instruction de demande de paramètre en erreur PE à la carte. CD transmet PE à RD en 42. La flèche 44 indique une instruction de demande de nombre unique (pseudo-aléatoire) NU de RD à CD, ce nombre NU est calculé par la carte, conservé en mémoire RAM et aussi transmis, en 45, à RD. Le lecteur RD invite le porteur à présenter (ou introduire) son code porteur en 43 et effectue, par addition modulo 2 bit à bit, le calcul d'un message de réhabilitation MR :

$MR = (CP, PE, PE) \oplus NU$

Puis RD envoie au système hôte HS le message MR (flèche 46), accompagné d'une instruction de demande d'authentification de ce message. HS chiffre MR sous la clé KEC :

$RES = DES_{KEC}(MR)$

et envoie, en 47, le cryptogramme résultant RES à RD qui, à son tour, le transmet à CD (en 48). Finalement, la carte exécute successivement trois calculs. Le premier calcul est le chiffrement inverse, sous la clé KEC, du cryptogramme RES : $DES_{KEC}^{-1}(RES) = MR'$

puis le cryptogramme obtenu MR' est combiné avec NU par addition modulo 2 :

$MR' \oplus NU = CP', PE', PE''$

On utilise ici la propriété de l'addition modulo 2 de donner comme résultat un premier opérande après que ce dernier a été additionné modulo 2 deux fois successivement avec un deuxième opérande. Le troisième et dernier calcul consiste à effectuer la comparaison entre PE', PE" et PE d'une part, d'autre part à vérifier que CP' est bien identique au code porteur CP stocké dans la carte, soit :

$CP' \equiv CP$

$PE' \equiv PE''$

$PE' \equiv PE$

Au cas où les trois identités existent (Y,Y), le bit B à l'adresse PE est fondu et la carte ainsi réhabilitée. Si par contre l'une au moins des identités n'existe pas (N,N), le bit B reste à la valeur 1 et la carte à l'état de blocage.

Des problèmes de formatage de nombres peuvent se poser pour les calculs décrits ci-dessus. Par exemple, l'algorithme DES nécessite des clés de 64 bits ; en conséquence, les données à crypter (chiffrer) doivent avoir une longueur de 64 bits. Si la donnée à chiffrer a une taille inférieure à 64 bits il faut la combler avec des "0" ou des "1" pour la ramener à 64 bits.

Lorsque la carte a, dans la deuxième application, déchiffré le message RES en effectuant :

$DES_{KEC}^{-1}(RES) = MR'$

puis combiné le cryptogramme résultant avec NU par addition modulo 2, elle obtient :

CP', PE', PE".

Si la carte vérifie une redondance sur PE', c'est-à-dire que PE' = PE", elle aura alors la certitude que le système hôte est bien authentique car il possédait la bonne clé pour chiffrer le message. Ainsi, la redondance permet de vérifier dans ce cas l'authenticité de l'émetteur.

**Revendications**

1. Procédé de génération de nombre unique NU pseudo-aléatoire par une carte à microcircuit, chaque nombre unique NU étant destiné à individualiser, lors d'une utilisation spécifique de la carte à microcircuit, la coopération, par l'intermédiaire de ladite carte, avec un système hôte, ladite carte comportant une mémoire vive RAM (10), et une mémoire morte PROM (7) incorporant une clé de fabrication PK, une clé émetteur MK, un code porteur CP et un numéro de série NS, selon lequel ledit nombre NU est engendré et stocké en mémoire RAM (10) dans ladite carte après exécution successive des étapes suivantes d'un programme spécifique de la carte :

   a - la combinaison des deux clés PK et MK en effectuant entre elles une opération logique dont le résultat est une clé KMP et le stockage en mémoire RAM (10) de la clé KMP, ladite clé KMP étant engendrée par ladite carte et inaccessible de l'extérieur,

   b - le chiffrement en ledit nombre unique NU d'un message d'entrée ME, unique, engendré par la carte, qui se modifie à chaque utilisation spécifique, au moyen d'un algorithme réversible ALG, ALG$^{-1}$ sous la clé KMP :
   $$NU = ALG_{KMP}(ME).$$

2. Procédé de génération de nombre unique NU selon la revendication 1, où ladite opération logique de l'étape a est l'addition modulo 2 des clés PK et MK :
   $$PK \oplus MK = KMP.$$

3. Procédé de génération de nombre unique NU selon la revendication 1 ou 2, caractérisé en ce que ledit algorithme de cryptage réversible est le système de chiffrement à clé secrète dit : Data Encryption Standard (DES, DES$^{-1}$).

4. Procédé de génération de nombre unique NU selon l'une des revendications 1 à 3, caractérisé en ce que ladite carte comporte en outre un compteur RAM (18) contenant le nombre CTRAM, un compteur ROM (19) contenant le nombre CTROM et que ledit message d'entrée ME est constitué par la juxtaposition des trois nombres : NS, CTRAM, CTROM, ledit compteur RAM (18) étant initialisé à 00...0 à chaque mise sous tension de la carte et incrémenté à chaque génération de nombre unique NU, et le compteur ROM (19) étant incrémenté lors d'une utilisation spécifique après chaque mise sous tension ou remise à zéro de la carte (RESET) si le code porteur CP n'a pas été présenté ou si le compteur RAM passe en débordement.

5. Application du procédé de génération de nombre unique NU selon l'une des revendications 1 à 4 à l'authentification d'un système hôte (14) coopérant, par l'intermédiaire d'un lecteur (11), avec une carte à microcircuit (1), caractérisée par les étapes suivantes en utilisant le principe du M.A.C. :

   a - le système hôte (14) envoie à la carte à microcircuit (1) une instruction de génération de nombre unique NU,

   b - la carte engendre un nombre unique NU selon le procédé de l'une des revendications 1 à 4, le stocke dans sa mémoire RAM et l'envoie au système hôte,

   c - la carte (1) et le système hôte (14) calculent au moyen dudit algorithme de cryptage, sous une même clé maître KAC de la carte, une valeur d'authentification VAE pour le système hôte et VAC pour la carte respectivement :
   $$VAE = ALG_{KAC}(NU)$$
   $$VAC = ALG_{KAC}(NU)$$

   d - le système hôte (14) envoie la valeur d'authentification VAE à la carte (1),

   e - la carte compare les valeurs d'authentification VAE et VAC et valide pour la suite des opérations sa coopération avec le système hôte si et seulement si l'identité suivante est vérifiée à l'intérieur de la carte : VAE = VAC.

6. Application du procédé de génération de nombre unique NU selon l'une des revendications 1 à 4 à la réhabilitation de carte à microcircuit (1) après plusieurs, notamment trois présentations consécutives fausses dudit code porteur CP, la carte (1) étant connectée à un système hôte (14), situé à distance, au moyen d'un lecteur (11), et ledit système hôte comportant une clé maître KEC de la carte, nécessaire à ladite réhabilitation ; cette application est caractérisée par les étapes suivantes :

a -     le lecteur (11) envoie à la carte à microcircuit (1) une instruction de génération de nombre unique NU,

b -     la carte engendre un nombre unique NU selon le procédé de l'une des revendications 1 à 4

c -     le lecteur (11) stocke le nombre unique NU en provenance de la carte, ainsi qu'un paramètre d'erreur PE et effectue la saisie du code porteur CP introduit par le porteur de la carte,

d -     le lecteur calcule un message de réhabilitation MR par addition modulo 2 :

$$MR = (CP, PE, PE) \oplus NU$$

e -     le lecteur envoie au système hôte (14) le message de réhabilitation MR accompagné d'une instruction de demande d'authentification du message MR,

f -     le système hôte chiffre sous la clé KEC le message MR :

$$RES = ALG_{KEC}(MR)$$

et envoie le cryptogramme RES au lecteur (11),

g -     le lecteur transmet le cryptogramme RES à la carte (1),

h -     la carte exécute, sous la clé KEC, le chiffrement inverse du cryptogramme RES :

$$ALG^{-1}_{KEC}(RES) = MR'$$

i -     la carte effectue l'addition modulo 2 :

$$MR' \oplus NU = CP', PE', PE''$$

j -     la carte annule le paramètre d'erreur PE si et seulement si les identités suivantes sont vérifiées à l'intérieur de la carte :

$$CP' \equiv CP$$

$$PE' \equiv PE'' \equiv PE.$$

**7.** Générateur conçu pour générer un nombre unique pseudo-aléatoire pour individualiser une opération d'accès particulière d'une carte logeant ledit générateur dans un environnement lecteur-système hôte (11,14), ledit générateur comportant : des moyens de mémorisation d'une clé de fabrication (PK), des moyens de mémorisation d'une clé émetteur (MK), des moyens de mémorisation d'un code porteur (CP), des moyens de mémorisation d'un numéro de série (NS), un premier compteur RAM (18), un second compteur PROM (19), des moyens de génération d'un message d'entrée approvisionnés par lesdits moyens de mémorisation d'un numéro de série et lesdits premier et second compteurs pour juxtaposer tout contenu ainsi approvisionné qui en émane, des moyens de génération de clé approvisionnés par lesdits moyens de mémorisation de clé de fabrication et lesdits moyens de mémorisation de clé émetteur pour additionner modulo 2 tout contenu ainsi approvisionné, et des moyens de chiffrement pour chiffrer ledit message d'entrée au moyen du contenu desdits moyens de génération de clé, ledit générateur comportant en outre des moyens de remise à l'état initial pour remettre à l'état initial ledit premier compteur (18) sous la commande de toute activation de la carte, et des moyens d'incrémentation pour incrémenter ledit premier compteur sous la commande de chaque activation desdits moyens de chiffrement, ainsi que des deuxièmes moyens d'incrémentation pour incrémenter ledit second compteur (19) sous la commande d'une utilisation spécifique après chaque activation de la carte ou remise à zéro de la carte, si le code porteur n'a pas été présenté ou si le premier compteur est en dépassement.

**8.** Carte à microcircuit (1) logeant un générateur selon la revendication 7.

**9.** Système de vérification comportant une chaîne de dispositifs interconnectés comportant un système hôte (14), un terminal et une carte (1) selon la revendication 8.

**10.** Système selon la revendication 9, comportant des moyens de vérification et de réhabilitation à deux niveaux.

**Patentansprüche**

**1.** Verfahren zum Erzeugen einer pseudobeliebigen einmaligen Zahl NU durch eine Mikroschaltungskarte, wobei jede einmalige Zahl NU, zum Individualisieren der Zusammenarbeit mittels dieser Karte mit einem Wirtssystem bei einer spezifischen Verwendung der Mikroschaltungskarte dient, die Karte einen RAM-Arbeitsspeicher (10) sowie einen PROM-Festwertspeicher (7) mit einem Herstellungsschlüssel PK, einem Benutzerschlüssel MK, einem Besitzercode CP und einer Seriennummer NS enthält, nach dem die Zahl NU erzeugt und in den RAM-Speicher (10) auf der Karte nach der aufeinanderfolgenden Durchführung folgender Schritte eines spezifischen Programms der Karte eingegeben wird:

a - das Verknüpfen der beiden Schlüssel PK und MK mittels der Durchführung einer logischen Operation, deren Ergebnis ein Schlüssel KMP und die Speicherung des Schlüssels KMP in den RAM-Speicher (10), wobei der Schlüssel KMP von der Karte erstellt wird, und von außen her unerreichbar ist,

b - das Verschlüsseln einer in der Karte erstellten Eingangsnachricht in die einmalige Zahl NU, wobei diese Nachricht sich bei jeder spezifischen Verwendung mit Hilfe eines umkehrbaren Algorithmus ALG, $ALG^{-1}$ unter dem Schlüssel KMP:

$NU = ALG_{KMP}(ME)$ ändert.

2. Verfahren zum Erzeugen der einmaligen Zahl NU nach Anspruch 1, dadurch gekennzeichnet, daß die logische Operation des Schrittes a der Modulo-2-Zusatz des Schlüssels PK und MK ist:

$PK \oplus MK = KMP$.

3. Verfahren zum Erzeugen der einmaligen Zahl NU nach Anspruch 1 oder 2, dadurch gekennzeichnet, daß der Algorithmus der umkehrbaren Verschlüsselung das Verschlüsselungssystem mit Geheimschlüssel mit der Bezeichnung Data Encryption Standard (DES, $DES^{-1}$) ist.

4. Verfahren zum Erzeugen der einmaligen Zahl NU nach einem der Ansprüche 1 oder 3, dadurch gekennzeichnet, daß die Karte außerdem einen RAM-Zähler (18) mit der Zahl CTRAM, und einen PROM-Zähler (19) mit der Zahl CTROM, und daß die Eingangsnachricht ME durch das Aneinanderreihen der drei Zahlen NS, CTRAM, CTROM entsteht, wobei der RAM-Zähler (18) bei jeder Spannungszufuhr zur Karte von 00...0 an startet und bei jeder Erzeugung der einmaligen Zahl NU inkrementiert wird, und der PROM-Zähler (19) jedesmal inkrementiert wird, wenn die Karte nach jeder Spannungszufuhr oder Rückstellung (RESET) spezifisch verwendet wird, falls der Besitzercode CP nicht vorgeführt ist, oder falls der RAM-Zähler eine Grenze überschreitet.

5. Durchführung des erfindungsgemäßen Verfahrens zum Erzeugen einer einmaligen Zahl NU nach einem der Ansprüche 1 bis 4 bezüglich der Beglaubigung eines mit einer Mikroschaltungskarte (1) mit Hilfe eines Lesers (11) zusammenarbeitendem Wirtssystems (14), dadurch gekennzeichnet. daß unter Verwendung des M.A.C.-Prinzips folgende Schritte ausgeführt werden:

a - das Wirtssystem (14) sendet der Mikroschaltungskarte (1) eine Instruktion zum Erzeugen einer einmaligen Zahl NU zu,

b - die Karte erzeugt eine einmalige Zahl NU nach einem der Ansprüche 1 bis 4, speichert sie in ihren RAM-Speicher und sendet sie dem Wirtsystem zu,

c - die Karte (1) und das Wirtssystem (14) berechnen mit Hilfe des Verschlüsselungsalgorithmus mit einem selben Meisterschlüssel KAC der Karte einen Beglaubigungswert VAE für das Wirtssystem bzw. VAC für die Karte:

$VAE = ALG_{KAC}(NU)$

$VAC = ALG_{KAC}(NU)$

d - das Wirtssystem (14) empfängt den Beglaubigungswert VAE auf der Karte (1),

e - die Karte vergleicht die Beglaubigungswerte VAE und VAC und verwertet für Fortsetzung der Operationen ihre Zusammenarbeit mit dem Wirtssystem, falls und nur falls folgende Identität im Inneren der Karte überprüft wird: $VAE \equiv VAC$.

6. Durchführung des Verfahrens zum Erzeugen einer einmaligen Zahl nach einem der Ansprüche 1 bis 4 bezüglich der Rehabilitierung der Mikroschaltungskarte (1) nach mehreren, insbesondere drei aufeinanderfolgenden falschen Vorführungen des Besitzercodes CP, wobei die Karte (1) mit einem im Abstand befindlichen Wirtssystem (14) mit Hilfe eines Lesers (11) verbunden ist, und das Wirtssystem einen Meisterschlüssel KEC der Karte erforderlich für die Rehabilitation enthält, und diese Durchführung ist durch folgende Schritte gekennzeichnet:

a - der Leser (11) sendet nach der Mikroschaltungskarte (1) eine Erzeugungsinstruktion für eine einmalige Zahl NU,

b - die Karte erzeugt eine einmalige Zahl NU mit dem Verfahren nach einem der Ansprüche 1 bis 4,

c - der Leser (11) speichert die einmalige aus der Karte kommende Zahl NU sowie einen Fehlerparameter PE und führt die Erfassung des vom Kartenträger eingeführten Besitzercodes CP aus,

d - der Leser berechnet eine Rehabilitationsnachricht MR durch Modulo-2-Ergänzung:

$MR = (CP, PE, PE) \oplus NU$

e - der Leser sendet dem Wirtssystem (14) die Rehabilitationsnachricht MR unter Begleitung von einer Nachrichtbeglaubigungs-Nachfrageinstruktion MR zu,

f - das Wirtssystem verschlüsselt unter dem Schlüssel KEC die Nachricht MR:

$RES = ALG_{KEC}(MR)$ und sendet das Kryptogramm RES dem Leser (11) zu,

g - der Leser überträgt das Kryptogramm RES auf die Karte (1),

h - die Karte führt unter dem Schlüssel KEC die umgekehrte Verschlüsselung des Kryptogramms RES aus:

$ALG^{-1}_{KEC}(RES) = MR'$

i - die Karte führt den Modulo-2-Zusatz aus:

$MR' \oplus NU = CP', PE', PE''$

J - die Karte macht den Fehlerparameter PE rückgängig, falls und nur falls folgende Identitäten im Inneren der Karte überprüft sind:

$CP' \equiv CP$

$PE' \equiv PE'' \equiv PE.$

7. Generator zum Erzeugen einer einmaligen pseudobeliebigen Zahl zum Individualisieren einer besonderen Zugangsoperation zu einer Karte mit diesem Generator in einer Leser-Wirtssystem-Umgebung (11, 14), wobei der Generator folgende Elemente enthält: Speichermittel für einen Herstellungsschlüssel (PK), Speichermittel für einen Ausgabeschlüssel (MK), Speichermittel für einen Besitzercode (CP), Speichermittel für eine Seriennummer (NS), einen ersten (RAM-)Zähler (18), einen zweiten (PROM-)Zähler (19), Erzeugungsmittel für eine Eingangsnachricht, die die Speichermittel für eine Seriennummer und die ersten und zweiten Zähler zum Aneinanderreihen jedes so versorgten Inhalts erstellen, die daraus entsteht, Erzeugungsmittel des Schlüssels, den die Speichermittel des Herstellungsschlüssels und die Speichermittel des Ausgabeschlüssels zum modulo 2 Zusetzen jedes so erstellten Inhalts liefern, und Verschlüsselmittel zum Verschlüsseln der Eingangsnachricht mit Hilfe des Inhalts der Schlüsserzeugungsmittel, wobei der Generator außerdem Zustandsrückstellmittel zum Rückstellen des ersten Zählers (18) in den Ausgangszustand unter der Steuerung jeder Aktivierung der Karte, und Inkrementiermittel zum Inkrementieren des ersten Zählers unter der Steuerung jeder Aktivierung der Verschlüsselmittel, sowie zweite Inkrementiermittel zum Inkrmentieren des zweiten Zählers (19) unter der Steuerung einer spezifischen Verwendung nach jeder Aktivierung der Karte oder nach jeder Nullrückstellung der Karte, falls der Besitzercode nicht eingeführt wurde oder falls der erste Zähler umgangen ist.

8. Mikroschaltungskarte (1) mit einem Generator nach Anspruch 7.

9. Verifikationssystem mit einer Reihe miteinander verbundener Einrichtungen mit einem Wirtssystem (14), einer Station und einer Karte (1) nach Anspruch 8.

10. System nach Anspruch 9 mit Verifikations- und Rehabilitationsmitteln auf zwei Ebenen.

## Claims

1. A method of generating a pseudo-random unique number NU by a smart card, each unique number NU being intended to individualize, for a specific use of the smart card, the cooperation with a host system via said card, said card comprising a random access memory RAM (10) and a read-only memory PROM (7) incorporating a production key PK, a distributor key MK, a bearer code CP and a serial number NS, said number NU being generated and stored in the memory RAM (10) in said card after successive execution of the following steps of a program which is specific of the card:

   a - combination of the keys PK and MK by performing a logic operation therebetween, resulting in a key KMP and storage of the KMP in the memory RAM (10), said key KMP being generated by said key card and being inaccessible from the outsides;

   b - encryption in said unique number NU of a unique input message ME which is generated by the card and which is modified upon each specific use by means of a reversible algorithm ALG, $ALG^{-1}$ by way of the key KMP:

   $NU\text{-}ALG_{KMP}(me).$

2. A method of generating a unique number NU as claimed in Claim 1, in which said logic operation of step a is the modulo-2 addition of the key PK and MK:

   $PK \oplus MK = KMP.$

3. A method of generating a unique number NU as claimed in Claim 1 or 2, characterized in that said reversible encryption algorithm is the secret key encryption system known as: Data Encryption Standard (DES, $DES^{-1}$).

**4.** A method of generating a unique number NU as claimed in one of the Claims 1 to 3, characterized in that said card also comprises a counter RAM (18) which contains the number CTRAM and a counter ROM (19) which contains the number CTROM, said input message ME being formed by the juxtaposition of three numbers: NS, CTRAM, CTROM, said counter RAM (18) being initialized to 0 0 ... 0 upon each activation of the card and being incremented upon each generation of the unique number NU, the counter ROM (19) being incremented upon a specific use after each activation or reset to zero of the card (RESET) if the bearer code CP has not been presented or if the counter RAM overflows.

**5.** The use of the method of generating a unique number NU as claimed in one of the Claims 1 to 4 for authentification of a host system (14) which cooperates, via a reader (11), with a smart card (1), characterized in that it comprises the following steps, utilizing the M.A.C. principle:

a - the host system (14) despatches an instruction for generating the unique number NU to the smart card (1),

b - the card generates a unique number NU by means of the method claimed in one of the Claims 1 to 4, stores it in its memory RAM, and applies it to the host system,

c - the card (1) and the host system (14) calculate, using said encryption algorithm and a same master key KAC of the card, an authentification value VAE for the host system and VAC for the card, respectively:
$$VAE = ALG_{KAC}(NU)$$
$$VAC = ALC_{KAC}(NU)$$

d - the host system (14) applies the authentification value VAE to the card (1),

e - the card compares the authentification values VAE and VAC and validates, for the further operations, its cooperation with the host system only if the following identity is verified within the card:
$$VAE = VAC.$$

**6.** The use of the method of generating a unique number NU as claimed in one of the Claims 1 to 4 for rehabilitating a smart card (1) after several, notably three, consecutive false presentations of said bearer code CP, the card (1) being connected to a remote host system (14) by means of a reader (11), said host system comprising a master key KEC of the card which is necessary for said rehabilitation, which use is characterized by the following steps:

a - the reader (11) instructs the smart card (1) to generate a unique number NU,

b - the card generates a unique number NU by means of the method claimed in one of the Claims 1 to 4,

c - the reader (11) stores the unique number NU from the card and also an error parameter PE and seizes the bearer of the card,

d - the reader calculates a rehabilitation message MR by modula-2 addition:
$$MR = (CP, PE, PE) \oplus NU$$

e - the reader despatches the rehabilitation message MR to the host system (14), accompanied by an instruction requesting authentification of the message MR,

f - fthe host system encrypts the message MR by way of the key KEC:
$$RES = ALC_{KEC}(MR)$$ and despatches the cryptogram RES to the reader (11),

g - the reader applies the cryptogram RES to the card (1),

h - the card executes, by way of the key KEC, the inverse encryption of the cryptogram RES:
$$ALG^{-1}_{KEC}(RES) = MR'$$

i - ithe card performs the modulo-2 addition
$$MR' \oplus NU = CP', PE', PE''$$

j - the card cancels the error parameter PE only if the following identities are verified within the card:
$$CP' \equiv CP$$
$$PE' \equiv PE'' \equiv PE.$$

**7.** A generator conceived to generate a pseudo-random unique number for individualizing a particular access operation of a card housing said generator in a reader/host system environment, said generator comprising: means for storing a production key (PK), means for storing a distributor key (MK), means for storing a bearer code (CP), means for storing a serial number (NS), a first counter RAM (18), a second counter PROM (19), means for generating an input message, fed by said serial number storage means and said first and second counters, in order to juxtapose any content so fed therefrom, key generating means, fed by said production key storage means and said distributor key storage means, for modulo-2 addition of any content so fed, and encryption means for encrypting said input message by means of the content of said key generating means, said generator furthermore comprising means for resetting said first counter (18) to its initial state under the control of any activation of the card, and means for incrementing said first counter under the control of each activation of said encryption means, and second means for incrementing said second counter (19) under the control of a specific use after each activation of the card, or reset to zero of the card, if the bearer code has not been presented or if the first counter overflows.

8. A smart card (1) housing a generator as claimed in Claim 7.

9. A verification system comprising a chain of interconnected devices, comprising a host system (14), a terminal, and a card (1) as claimed in Claim 8.

10. A system as claimed in Claim 9, comprising means for verification and rehabilitation at two levels.

FIG.1

FIG.2

FIG.3